(19) Europäisches Patentamt
European Patent Office
Office européen des brevets

(11) **EP 3 620 062 B1**

(12) **EUROPEAN PATENT SPECIFICATION**

(45) Date of publication and mention of the grant of the patent:
**25.03.2026 Bulletin 2026/13**

(21) Application number: **19205502.8**

(22) Date of filing: **28.06.2016**

(51) International Patent Classification (IPC):
*A23G 9/24* *(2006.01)*    *A23G 9/28* *(2006.01)*
*A23G 9/48* *(2006.01)*    *A23G 9/50* *(2006.01)*

(52) Cooperative Patent Classification (CPC):
**A23G 9/48; A23G 9/24; A23G 9/28; A23G 9/50**

(54) **FROZEN DESSERT**

GEFRORENES DESSERT

DESSERT GLACÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.06.2015 EP 15174378**
**29.06.2015 EP 15174385**

(43) Date of publication of application:
**11.03.2020 Bulletin 2020/11**

(62) Document number(s) of the earlier application(s) in accordance with Art. 76 EPC:
**16736414.0 / 3 313 197**

(73) Proprietor: **MAGNUM IP HOLDINGS B.V.**
**1017 BM Amsterdam (NL)**

(72) Inventors:
• **BYRNE, Luke Daniel, Peter**
**Down, Northern Ireland BT33 0LA (GB)**
• **CHENEY, Paul, Edward**
**Bedford, Bedfordshire MK44 1LQ (GB)**
• **LITCHFIELD, Timothy, John**
**Bedford, Bedfordshire MK44 1LQ (GB)**

• **WILLMOTT, Mark**
**Bedford, Bedfordshire MK44 1LQ (GB)**

(74) Representative: **Potter Clarkson**
**Chapel Quarter**
**Mount Street**
**Nottingham NG1 6HQ (GB)**

(56) References cited:
GB-A- 2 045 050        US-A- 5 135 767
US-A- 5 283 070        US-A- 5 356 648
US-A1- 2015 157 042        US-A1- 2015 164 106

• DATABASE WPI Week 201210, 26 January 2012 Derwent World Patents Index; AN 2012-B19488, XP002748120, "Preparing frozen dessert e.g. ice cream, involves filling fluid cream and fluid auxiliary material in container, and cooling obtained mixture"
• "Science and Technology of Enrobed and Filled Chocolate, Confectionery and Bakery Products", 1 January 2009, ELSEVIER, ISBN: 978-1-84569-390-9, article D.J. CEBULA ET AL: "Chocolate and couvertures: applications in ice cream", pages: 163 - 182, XP055222666, DOI: 10.1533/9781845696436.1.163

## Description

The invention relates to a frozen dessert, in particular a frozen dessert comprising a deformable container coated on the interior surface with a first solid fat-based edible composition to provide a shell, which shell is filled with a frozen confection and optionally one or more ribbons of a second solid fat-based edible composition, and topped with a lid of a third fat-based edible composition.

Magnum™ Ice Cream products are very popular products with consumers and are sold worldwide. These products consist of a block of ice cream on a stick. The ice cream is covered with a real chocolate coating. The real chocolate coating provides a very glossy, thick coating that is highly prized by consumers and provides an impression of luxury and quality when the packaging of the Magnum products is first removed. When the Magnum products are consumed the consumer's first experience is a bite through the thick chocolate coating which breaks with a very noticeable cracking behaviour perceivable through all the senses, especially touch, sound and sight. On consumption, the products deliver creamy ice cream with hard cracking chocolate shards that melt in the in-mouth environment to deliver a strong chocolate element to the ice cream experience. Extensive research into the Magnum products has shown that these characteristics (the initial view of the high quality, thick, glossy chocolate coating; followed by the cracking sensation upon first bite; and then creamy ice cream with hard cracking chocolate shards that melt in the in-mouth environment) are all critical in the consumer experience of these items. It is now desired to replicate this product experience in a container-based ice cream product.

WO 02/15706 A (Societe des Produits Nestle SA) discloses a composite frozen confectionery item including a cone, truncated cone or cup shaped shell formed from a solid fat based composition and nestingly contained substantially within a close fitting protective packaging sheet of corresponding shape, the confectionery item and packaging sheet each having an open end and a closed end and the shell forming a lining in substantially contiguous contact with an internal surface of the packaging sheet and a filling of ice confectionery.

WO 2014/023610 A (NNT) discloses a method for insulating the filling contents of a food product including the following steps:

(a) providing at least one shell initially made of an edible mouldable material;
(b) applying at least one coating layer including at least one fatty substance in said shell in order to form an inner insulating coating layer;
(c) feeding the filling contents into said shell;
(d) applying at least one covering layer including at least one fatty substance onto the filling contents in order to obtain a continuous insulating covering layer that bonds to said inner insulating coating layer; and
(e) closing said shell by applying an edible mouldable material,

characterized in that the second and fourth steps are preceded by cooling to a temperature of around -25 degrees centigrade to 30 degrees centigrade, and in that the fifth step is preceded by a step of heating said upper surface of said mould.

WO 2008/119731 A (Nestec SA) discloses a process for producing a chilled dessert item containing a crunchy composition arranged in superimposed layers in its mass, comprising the following steps:

(a) a helical ribbon of milk, cereal-based, vegetable-based or fruit-based, product is continuously metered through a milk, cereal-based, vegetable-based or fruit- based, product outlet orifice of a metering nozzle;
(b) a layer of molten substance intended to form the crunchy composition after cooling is applied, to the helical ribbon being formed, continuously from the beginning of it being formed to the end of it being metered, by metering through at least one molten substance outlet orifice of said metering nozzle; and
(c) the helical layer of molten substance thus being formed is trapped between the first ribbon of milk, cereal-based, vegetable-based or fruit-based, product and a second helical ribbon of milk, cereal-based, vegetable-based or fruit-based, product, by concomitantly and continuously metering the second ribbon of product through a second product outlet orifice of the metering nozzle, such that said second ribbon is deposited onto the helical layer of molten substance being formed, simultaneously with the molten substance coming into contact with the first helical ribbon being formed.

JP 01/124,354 A (Kanebo Ltd) discloses a method for manufacturing a frozen dessert which is characterised in comprising:

(a) a step for forming a shell where a frozen dessert mix is filled in a mould being dipped in a cooling medium to freeze the outermost layer and the non-frozen area in the inner area thereof is removed by sucking,
(b) a step for filling a chocolate where a chocolate liquid is filled in the bottom of the inner side of the shell,

(c) a step for forming a thin chocolate layer where a frozen dessert mix having higher specific gravity than that of the above chocolate liquid is filled into the above-filled chocolate liquid so that the chocolate liquid moves upward along the inner wall of the shell followed by hardening and

(d) a step for forming a frozen dessert where the above-filled frozen desert mix is frozen.

JP 08/140,583 A (Meiji Milk Products Co Ltd) discloses a method for manufacturing a chocolate-coated ice cream equipped with a container, characterised in that, melted chocolate is filled in a container and cooled with cold water from outside of the container and, when a chocolate layer is formed by hardening of the chocolate contacting the inner wall of the container, the chocolate which is left unhardened in the container is sucked, ice cream is then filled in the resulting space areas and, after that, the upper area of the ice cream is coated with the chocolate.

JP 2011/182,765 A (Ezaki Glico Co Ltd) discloses a multi-layered frozen dessert in which additives comprising less fluid materials are made into multiple layers and each layer is made to thinly spread from the outer surrounding and almost to the central area of the frozen dessert and also to provide a method for manufacturing the same. In a vertical cross section of the frozen dessert, plural chocolate layers are layered having intervals in upside and downside and, at the same time, each chocolate layer is filled in the frozen dessert in such a manner that it expands to outer surroundings of both right and left sides from the central area of the frozen dessert. The sauce is filled in such a manner that it contacts the upside or downside of each chocolate layer.

US 2015/157042 A1 discloses an ice cream cup, ice cream positioned within the receptacle and a dome extending over the rim of the receptacle. The dome comprises layers of chocolate spiralling up (above the rim of the receptacle) and an outside coverage of chocolate. However it does not disclose a shell or lid of a fat-based edible composition positioned within the receptacle.

US 5,135,767 A discloses an ice confectionary which contains a large quantity of flakes of crispy composition arranged transversely in the form of substantially continuous ribbons.

US 5,282,070 discloses an aerated dessert article containing a large quantity of flakes of crispy composition arranged transversely in the form of substantially continuous ribbons.

JP 2012 016317 A discloses a frozen dessert in which a solid auxiliary material is dispersed in a cream, and a method for producing the same.

US 2015/164106 A1 discloses a frozen confectionery product with a layered structure; these layers are in the form of annular or helical chocolate layers separated by ice cream layers.

US 5,356,648 A discloses novel frozen desserts incorporating ribbons, of chocolate.

However, none of these provide container-based ice cream products with the required characteristics to replicate the product experience of the stick-based Magnum products. We have now designed a container-based ice cream product that not only delivers all of the characteristics of: initial view of a high quality, thick chocolate coating; cracking sensation upon first bite; and creamy ice cream with hard cracking chocolate shards that melt in the in-mouth environment but can also provide a cracking sensation before the products are even opened by the consumer yet the products still appear intact to the consumer when opened.

Summary of the Invention

Accordingly, in a first aspect of the invention, a frozen dessert is provided, according to claim 1.

This unique structure delivers a high quality product that provides a cracking experience which is readily apparent to the consumer. This cracking experience is observable when the frozen dessert is at -18 degrees centigrade and squeezed with a force typical for unassisted manual squeezing, because cracking of the shell of first solid fat-based edible composition is audible. When the frozen dessert is squeezed further at -18 degrees centigrade, cracking of the one or more continuous seams of a second solid fat-based edible composition is then audible. However, an undamaged lid is critical because consumers do not want to see a cracked lid when the product is first opened and it has surprisingly been found that the presence of the shell or the ribbons actually prevents the lid from suffering cracking when the container is deformed.

The term "deformable container" means, for the purposes of this invention, a container that may be visibly deformed by a consumer squeezing the external surface of the container. It means that the container is plastically deformable - that is to say that the container returns to exactly its original state after being deformed. For the avoidance of doubt, containers comprising cardboard or a similar paper-based material are not plastically deformable because the deformation can cause changes to the structure such as creasing and fold lines and therefore does not return to its original state after being deformed. Similarly, wafer-based containers such as cones are also not plastically deformable since deformation leads to breakages in brittle wafers and flexible wafers do not return to their original shape.

The term "solid fat-based edible composition" means, for the purposes of this invention, chocolate (dark chocolate, white chocolate, milk chocolate), a chocolate analogue, or a fruit-fat composition. The term "chocolate" is not intended to be limited to compositions that can legally be described as chocolate in any particular country but includes any products having the general character of chocolate. It therefore includes chocolate-like materials that comprise fats other than cocoa butter (for example coconut oil). Chocolate usually contains non-fat cocoa solids, but it is not essential that it does so (for example white chocolate). The term chocolate analogue means chocolate-like fat-based confection compositions made with fats other than cocoa butter (for example cocoa butter equivalents, coconut oil or other vegetable oils). Such chocolate analogues are sometimes known as couvertures of compound chocolate. Chocolate analogues need not conform to standardized definitions of chocolate that are used in many countries. In addition to fat and cocoa solids, chocolate and chocolate analogues may contain milk solids, sugar or other sweeteners and flavourings. A fat-based coating may consist essentially of vegetable oil and sugar, together with colours and / or flavours as required. A fruit-fat composition comprises 70 to 99 % w/w fats other than cocoa butter and less than 20 % w/w fruit powder. For the avoidance of doubt, where the present application refers to a first, second or third fat-based edible composition these fat-based edible compositions can be different or can all be the same fat-based edible composition. Preferably they are the same fat-based edible composition.

The term "frozen confection" means, for the purposes of this invention, a confection made by freezing a pasteurised mix of ingredients such as water, fat, sweetener, protein (normally milk proteins), and optionally other ingredients such as emulsifiers, stabilisers, colours and flavours. Frozen confections may be aerated. Frozen confections include ice cream, frozen yoghurt and the like. Preferably the frozen confection is an ice cream.

The term "slot" means, for the purposes of this invention, any elongated shape and is not limited to purely rectangular shapes unless this is clear from the context, thus the slot could have the form of, for example, a wave.

## Brief Description of the Figures

The invention is now described in detail with reference to the figures which show in:

Figure 1    a modified 3 - point bend test geometry experimental arrangement for determining the Young's modulus (GPa), yield strength (MPa) the and the work of fracture (J) of various chocolate strips;

Figure 2    a force - displacement diagram for a modified 3 - point bend test according to Figure 1 conducted on a chocolate strip;

Figure 3    a stylised force - displacement diagram for the Vickers hardness of a frozen confection; and in

Figure 4    Log Vickers hardness versus squeeze perception for a suite of frozen confections of varying hardness.

## Detailed Description of the Invention

The deformable container typically consists of a plastics material, preferably a plastic material selected from the group consisting of polypropylene, polyethylene, polyethylene terephthalate, polystyrene and mixtures thereof.

The first, second and third fat-based edible compositions, whilst applied as liquids, solidify when cooled down on contact with the frozen confection. Chocolates have complex solidification behaviour because they contain mixtures of different triglycerides which can crystallize in different forms. For example, cocoa butter can exist in six different crystalline forms (polymorphs). As chocolate solidifies, triglycerides begin to crystallize. Within a few seconds the chocolate becomes dry to the touch and has plastic or leathery texture.

Crystallization continues slowly, so that it typically takes several hours or days for the triglycerides to fully crystallize and for the chocolate to reach its maximum brittleness. Chocolate made from fats other than cocoa butter displays similar behaviour, but typically crystallizes over a narrower temperature range and reach maximum brittleness more quickly. Preferably the first and second and optionally the third fat-based edible compositions are chocolate.

## SHELL

The shell preferably has a wall thickness of 0.5 to 3, preferably 0.5-2, most preferably 1-1.5 mm. The shell preferably has a wall thickness of at least 0.25 mm, more preferably at least 0.5 mm, more preferably still at least 0.75 mm, yet more preferably at least 1 mm, even more preferably at least 1.25 mm, most preferably at least 1.4 mm. The shell preferably has a wall thickness of at most 4 mm, more preferably at most 3.5 mm, more preferably still at most 3 mm, yet more preferably at most 2.5 mm, even more preferably at most 2 mm, most preferably at most 1.5 mm.

In one embodiment the wall thickness of the shell is uniform, that is to say that there is little variation in the thickness.

In a further embodiment the wall thickness of the shell is variable, that is to say that some areas of the shell are thicker than others. In such an embodiment the term wall thickness refers to the average thickness of the wall as calculated by drawing a notional line perpendicular to the shell wall and measuring the distance between the external and internal faces of the wall, repeating this measurement at least 5 times, and calculating the average.

It has been observed that if the shell thickness is too low, then it tends to warm up too quickly after removal from a freezer and becomes plastic in its rheology and then the shell cannot crack. If the shell thickness is too high, it will not crack when the frozen dessert is squeezed by hand.

In embodiments of the product of the invention where ribbons are also present, the ribbons can be conjoined with the shell, in which case it has been observed that the cracking experience is more apparent to the consumer. They can also be separate, in which case the cracking experience is still apparent to the consumer.

Without wishing to be bound by theory it is believed that the shell provides the cracking experience when the deformable container is deformed. This cracking experience replicates the "biting cracking" experience of the stick-based Magnum product mentioned above. Furthermore, by carefully controlling the architecture of the shell the loudness and longevity (in this context, the term "longevity" means the number of distinct cracking events as measured using an acoustic detector) of the cracking can also be controlled.

The shell has a Young's modulus of 0.3 - 5.0, more preferably 0.8 - 2.0 GPa at a serving temperature of -18 degrees centigrade. Preferably the shell has a Young's modulus of at least 0.1 GPa, more preferably at least 0.2 GPa, more preferably still at least 0.3 GPa, yet more preferably at least 0.5 GPa, even more preferably at least 0.8 GPa, most preferably at least 1 GPa at a serving temperature of -18 degrees centigrade. The shell preferably has a Young's modulus of at most 5 GPa, more preferably at most 4 GPa, more preferably still at most 3.5 GPa, yet more preferably at most 3 GPa, even more preferably at most 2.5 GPa, most preferably at most 2 GPa at a serving temperature of -18 degrees centigrade. It has been observed that when the shell has these preferred and more preferred Young's modulus ranges, the audibility of cracking is maximised. The Young's modulus of the shell was determined using the method described in Example 3.

Preferably the shell has a yield strength of 1-20 MPa, more preferably 3-15 MPa at a serving temperature of -18 degrees centigrade. Preferably the shell has a yield strength of at least 1 MPa, more preferably at least 2 MPa, more preferably still at least 3 MPa, yet more preferably at least 4 MPa, even more preferably at least 5 MPa, most preferably at least 5.5 MPa at a serving temperature of -18 degrees centigrade. The shell preferably has a yield strength of at most 20 MPa, more preferably at most 18 MPa, more preferably still at most 15 MPa, yet more preferably at most 14 MPa, even more preferably at most 12 MPa, most preferably at most 10 MPa at a serving temperature of -18 degrees centigrade. It has been observed that when the shell has these preferred and more preferred yield strength ranges, the audibility of cracking is maximised. The yield strength of the shell was determined using the method described in Example 3.

Preferably the shell has a work of fracture of 0.0004-0.002, more preferably 0.0006-0.0016 J at a serving temperature of -18 degrees centigrade. Preferably the shell has a work of fracture of at least 0.0002 J, more preferably at least 0.0004 J, more preferably still at least 0.0006 J, yet more preferably at least 0.0007 J at a serving temperature of -18 degrees centigrade. The shell preferably has a work of fracture of at most 0.0022 J, more preferably at most 0.002 J, more preferably still at most 0.0018 J, yet more preferably at most 0.0015 J, even more preferably at most 0.0012 J, most preferably at most 0.0010 J at a serving temperature of -18 degrees centigrade. It has been observed that when the shell has these preferred and more preferred work of fracture ranges, the audibility of cracking is maximised. The work of fracture of the shell was determined using the method described in Example 3.

## RIBBONS

Preferably the filling comprises at least two, preferably at least three ribbons of a second solid fat-based edible composition.

Preferably the ribbons of a second solid fat-based edible composition have a thickness of at least 0.25 mm, more preferably at least 0.5 mm, more preferably still at least 0.75 mm, yet more preferably at least 1 mm, even more preferably at least 1.25 mm, most preferably at least 1.4 mm. The ribbons preferably have a thickness of at most 4 mm, more preferably at most 3.5 mm, more preferably still at most 3 mm, yet more preferably at most 2.5 mm, even more preferably at most 2 mm, most preferably at most 1.5 mm.

In one embodiment the thickness of the ribbons is uniform, that is to say that there is little variation in the thickness.

In a further embodiment the thickness of the ribbons is variable, that is to say that some areas of the ribbons are thicker than others. In such an embodiment the term thickness refers to the average thickness of the ribbons as calculated by drawing a notional line perpendicular to the face of the ribbon and measuring the distance across the face of the ribbon, repeating this measurement at least 5 times, and calculating the average.

Preferably the ribbons of a second solid fat-based edible composition have a width of at least 10, preferably at least 15, most preferably at least 25 mm and preferably at most 50mm, more preferably at most 40mm, most preferably at most 30mm.

In one embodiment the width of the ribbons is uniform, that is to say that there is little variation in the thickness.

In a further embodiment the width of the ribbons is variable, that is to say that some areas of the ribbons are wider than others. In such an embodiment the term width refers to the average width of the ribbons as calculated by drawing a notional line parallel to the base of the deformable container from one side of the ribbon to the other, measuring the distance, repeating this measurement at least 5 times, and calculating the average.

Preferably the filling comprises 2-10, preferably 4-8 % v/v ribbons of a second solid fat-based edible composition.

Preferably the ribbons of a second solid fat-based edible composition adopt a wave configuration in the frozen dessert. It has been observed that the wave configuration is advantageous in that the ribbons of a second solid fat-based edible composition crack audibly when the deformable container is squeezed from any direction. If the force is from the sides of the ribbon, it will collapse from the edges inwards. If the force is perpendicular to the ribbon edges, the wave structure of the ribbons will be compressed and audible cracking still occurs. If the force is applied from an intermediate direction, then the ribbon will still collapse due to a combination of the aforementioned effects.

In embodiments of the product of the invention where the shell is also present, then the ribbons can be conjoined with the shell, in which case it has been observed that the cracking experience is more apparent to the consumer. They can also be separate, in which case the cracking experience is still apparent to the consumer.

Without wishing to be bound by theory it is believed that the ribbons provide the cracking experience when the deformable container is deformed. This cracking experience replicates the "biting and cracking" experience of the stick-based Magnum product mentioned above. Furthermore, by carefully controlling the architecture of the ribbons the loudness and longevity of the cracking can also be controlled. In addition, when a spoon is used to serve or consume the product, the spoon passes through the ribbons and creates the cracking sound further replicating the "biting" experience. Then on consumption they provide creamy ice cream with chocolate shards.

Preferably the ribbons have a Young's modulus of 0.3 - 5.0, more preferably 0.8 - 2.0 GPa at a serving temperature of -18 degrees centigrade. Preferably the ribbons have a Young's modulus of at least 0.1 GPa, more preferably at least 0.2 GPa, more preferably still at least 0.3 GPa, yet more preferably at least 0.5 GPa, even more preferably at least 0.8 GPa, most preferably at least 1.0 GPa at a serving temperature of -18 degrees centigrade. The ribbons preferably have a Young's modulus of at most 5 GPa, more preferably at most 4 GPa, more preferably still at most 3.5 GPa, yet more preferably at most 3 GPa, even more preferably at most 2.5 GPa, most preferably at most 2 GPa at a serving temperature of -18 degrees centigrade. It has been observed that when the ribbons have these preferred and more preferred Young's modulus ranges, the audibility of cracking is maximised. The Young's modulus of the ribbons were determined using the method described in Example 3.

Preferably the ribbons have a yield strength of 1-20 MPa, more preferably 3-15 MPa at a serving temperature of -18 degrees centigrade. Preferably the ribbons have a yield strength of at least 1 MPa, more preferably at least 2 MPa, more preferably still at least 3 MPa, yet more preferably at least 4 MPa, even more preferably at least 5 MPa, most preferably at least 5.5 MPa at a serving temperature of -18 degrees centigrade. The ribbons preferably have a yield strength of at most 20 MPa, more preferably at most 18 MPa, more preferably still at most 15 MPa, yet more preferably at most 14 MPa, even more preferably at most 12 MPa, most preferably at most 10 MPa at a serving temperature of -18 degrees centigrade. It has been observed that when the ribbons have these preferred and more preferred yield strength ranges, the audibility of cracking is maximised. The yield strength of the ribbons were determined using the method described in Example 3

Preferably the ribbons have a work of fracture of at least 0.0002 J, more preferably at least 0.0004 J, more preferably still at least 0.0006 J, yet more preferably at least 0.0007 J at a serving temperature of -18 degrees centigrade. The ribbons preferably have a work of fracture of at most 0.0022 J, more preferably at most 0.002 J, more preferably still at most 0.0018 J, yet more preferably at most 0.0015 J, even more preferably at most 0.0012 J, most preferably at most 0.0010 J at a serving temperature of -18 degrees centigrade. It has been observed that when the ribbons have these preferred and more preferred work of fracture ranges, the audibility of cracking is maximised. The work of fracture of the ribbons were determined using the method described in Example 3

## LID

In the product of the present invention the lid has a key role as an indicator of a high-end quality because it is the first thing the consumer sees when opening the product and the chocolate disc of the lid with optional branding or other decoration provides the impression of luxury and quality upon the initial view of the product. The lid also delivers further cracking experience when the product is served because the spoon breaks through the lid to provide a cracking experience which also replicates the first "biting" experience.

It is therefore apparent that the lid has a role in the cracking experience and the brittleness and thickness of the lid is designed to ensure that it breaks to provide a cracking noise. However, it is also apparent that the lid must stay intact until the consumer is ready to eat the product. It must remain intact during manufacture, transport and storage. It must also stay intact when in the retail outlets where the consumer will purchase it. Critically, it must also remain intact when the product is squeezed by the consumer to invoke the cracking experience that is integral to this product. As can be readily appreciated, there is a significant challenge associated with providing a product with brittle, breakable chocolate components such as the shell, ribbons and lid wherein only certain components (shell, ribbons) are intended to break on squeezing whereas other components (lid) must remain intact until a later point in time.

It has surprisingly been found that the specific architecture of the product of the first aspect provides protection to the lid. As can be seen from the examples below, the presence of the shell delivers protection to the lid such that the product provides a cracking experience when squeezed but with significantly reduced damage to the lid caused by that squeezing.

As can also be seen from the examples below, the presence of the ribbons also delivers protection to the lid such that the product provides a cracking experience when squeezed but with significantly reduced damage to the lid caused by that squeezing. Moreover, when the shells and ribbons are present in the same product then they provide synergistic protection to the lid.

Preferably the lid has a thickness of at least 0.5 mm, more preferably at least 0.75 mm, more preferably still at least 1 mm, yet more preferably at least 1.5 mm, even more preferably at least 2 mm, more preferably still at least 2.5 mm, even more preferably still at most 3 mm, most preferably at most 3.5 mm. The lid preferably has a thickness of at most 5 mm, more preferably at most 4.5 mm, more preferably still at most 4 mm, yet more preferably at most 3.75 mm.

In one embodiment the thickness of the lid is uniform, that is to say that there is little variation in the thickness.

In a further embodiment the thickness of the lid is variable, that is to say that some areas of the lid are thicker than others. In such an embodiment the term thickness refers to the average thickness of the lid as calculated by drawing a notional line perpendicular to the lid and measuring the distance between the upper and lower faces of the lid, repeating this measurement at least 5 times, and calculating the average.

Preferably the lid has a Young's modulus of 0.3 - 5.0, more preferably 0.8 - 2.0 GPa at a serving temperature of -18 degrees centigrade. Preferably the lid has a Young's modulus of at least 0.1 GPa, more preferably at least 0.2 GPa, more preferably still at least 0.3 GPa, yet more preferably at least 0.5 GPa, even more preferably at least 0.8 GPa, most preferably at least 1 GPa at a serving temperature of -18 degrees centigrade. The lid preferably has a Young's modulus of at most 5 GPa, more preferably at most 4 GPa, more preferably still at most 3.5 GPa, yet more preferably at most 3 GPa, even more preferably at most 2.5 GPa, most preferably at most 2 GPa at a serving temperature of -18 degrees centigrade. It has been observed that when the lid has these preferred and more preferred Young's modulus ranges, the audibility of cracking is maximised. The Young's modulus of the lid was determined using the method described in Example 3.

Preferably the lid has a yield strength of 1-20 MPa, more preferably 3-15 MPa at a serving temperature of -18 degrees centigrade. Preferably the lid has a yield strength of at least 1 MPa, more preferably at least 2 MPa, more preferably still at least 3 MPa, yet more preferably at least 4 MPa, even more preferably at least 5 MPa, most preferably at least 5.5 MPa at a serving temperature of -18 degrees centigrade. The lid preferably has a yield strength of at most 20 MPa, more preferably at most 18 MPa, more preferably still at most 15 MPa, yet more preferably at most 14 MPa, even more preferably at most 12 MPa, most preferably at most 10 MPa at a serving temperature of -18 degrees centigrade. It has been observed that when the lid has these preferred and more preferred yield strength ranges, the audibility of cracking is maximised. The yield strength of the lid was determined using the method described in Example 3.

Preferably the lid has a work of fracture of at least 0.0002 J, more preferably at least 0.0004 J, more preferably still at least 0.0006 J, yet more preferably at least 0.0007 J at a serving temperature of -18 degrees centigrade. The lid preferably has a work of fracture of at most 0.0022 J, more preferably at most 0.002 J, more preferably still at most 0.0018 J, yet more preferably at most 0.0015 J, even more preferably at most 0.0012 J, most preferably at most 0.0010 J at a serving temperature of -18 degrees centigrade. It has been observed that when the lid has these preferred and more preferred work of fracture ranges, the audibility of cracking is maximised. The work of fracture of the lid was determined using the method described in Example 3.

## ICE CREAM

The frozen confection must have particular structural characteristics in order to ensure that when the product is manufactured, stored, transported, sold, bought, shipped to the point of consumption, and stored at the point of consumption that it will provide adequate support to the shell to prevent the shell and one or more ribbons of a second solid fat-based edible composition from cracking due to the mechanical impacts it will experience during all these stages.

The frozen confection must also have particular structural characteristics to ensure that the product behaves in the desired way such that the application of force to the exterior of the container will result in audible cracking of the shell and one or more ribbons of a second solid fat-based edible composition within the deformable container.

Thus when the deformable container is squeezed, the frozen confection must deform readily away from the areas at which pressure is applied. This ensures that the shell is deformed by the pressure being applied and therefore fractures. If the frozen confection were too hard or for any other reason not capable of deformation away from the areas at which pressure is applied, then it would resist the external force and consequently the shell would be supported and cracking of the shell would be inhibited.

Conversely, if the frozen confection is too soft, although the frozen confection would allow the shell to be deformed and cracked by the pressure being applied externally, it is highly likely that the product would not survive the distribution chain as described above and at the point of consumption the shell would have already suffered significant damage and would therefore not provide the desired cracking sound.

The frozen confection preferably has a specific heat capacity of 2500 to 3600, more preferably 2750 to 3350, most preferably 2900 to 3200 J/kg/K. It has been observed that a frozen confection with the various preferred ranges of specific heat capacity when subject to periodic elevated temperatures, such as during transportation from shop to home, provides a source of cooling to the shell such that the shell does not begin to lose its crystalline structure or change its polymorph and become soft.

Whilst the frozen confection must deform readily away from the areas at which pressure is applied when the deformable container is squeezed to allow the shell to crack, the frozen confection must also not deform too much because it needs to be able to transfer the deformative pressure being applied to it to the one of more ribbons of a second solid fat-based edible composition. If the frozen confection were too hard or for any other reason not capable of deformation away from the areas at which pressure is applied, then it would resist the external force and consequently the one or more ribbons of a second solid fat-based edible composition could not be deformed and would not crack.

Conversely, the frozen confection cannot be too soft. If it was then although the ice cream would yield to allow the shell to be deformed and cracked by the pressure being applied externally, the frozen confection would absorb the pressure and not transfer the pressure through to the one or more ribbons of a second solid fat-based edible composition which would therefore not crack as desired.

The frozen confection preferably comprises at most 30 % w/w of total sugars. As used herein the term "sugars" refers exclusively to digestible mono- and di-saccharides. The total sugar content of a frozen confection is thus the sum of all of the digestible mono- and di-saccharides present within the frozen confection, including any lactose from milk solids and any sugars from fruits. The frozen confection comprises more preferably at most 25, most preferably at most 20 % w/w total sugars. Preferably the frozen confection contains at least 1, more preferably at least 2, most preferably at least 5 % w/w total sugars.

The frozen confection further typically contains stabilisers, the primary purposes of which is to produce smoothness in body and texture, retard or reduce ice and lactose crystal growth during storage, and to provide uniformity of product and resistance to melting. Additionally, they stabilize the mix to prevent wheying off, produce a stable foam with easy cut-off in the freezer, and slow down moisture migration from the product to the package or the air. The action of stabilisers in ice cream results from their ability to form gel-like structures in water and to hold free water. Iciness can be controlled by stabilizers due to a reduction in the growth of ice crystals over time related to a reduction in water mobility as water is entrapped by their entangled network structures. Suitable stabilisers include one or more of tara gum, guar gum, locust been gum, carrageenan, gelatin, alginate, carboxymethyl cellulose, xanthan and pectin. The frozen confection comprises preferably at least 0.05, more preferably at least 0.10, most preferably at least 0.2 % w/w of stabilisers. Preferably the frozen confection comprises at most 5, more preferably at most 3, most preferably at most 2.5 % w/w of stabilisers.

The frozen confection may also contain non-saccharide sweetener which as defined herein consist of: the intense sweeteners aspartame, saccharin, acesulfame K, alitame, thaumatin, cyclamate, glycyrrhizin, stevioside, neohesperidine, sucralose, monellin and neotame; and the sugar alcohols HSH (hydrogenated starch hydrosylate (also known as polyglycitol)), eythritol, arabitol, glycerol, xylitol, sorbitol, mannitol, lactitol, maltitol, isomalt, and palatinit.

The frozen confection may be aerated. The term "aerated" means that gas has been intentionally incorporated into the product, such as by mechanical means. The gas can be any food-grade gas such as air, nitrogen or carbon dioxide. The extent of aeration is typically defined in terms of "overrun" (OR). In the context of the present invention, % overrun is defined in volume terms (measured at atmospheric pressure) as:

$$OR = \frac{\text{volume of frozen aerated product} - \text{volume of premix at ambient temp}}{\text{volume of premix at ambient temp}} \times 100$$

Preferably the frozen confection has an overrun of 40 to 150, more preferably from 60 to 120 %.

Preferably the ice content of the frozen confection at -18 degrees centigrade is 35-55, more preferably 40-50 % w/w. The ice content is calculated from the freezing curve for sucrose solutions as described, for example, on pages 28-29 of "The Science of Ice Cream", C. Clarke, RSC, Cambridge, UK, 2004.

The frozen confection has a Vickers hardness of 0.042-0.36, preferably 0.072-0.21 at a serving temperature of -18 degrees centigrade. It has been observed that when the frozen confection has these preferred and most preferred hardness ranges, the audibility of cracking of the one or more ribbons of a second solid fat-based edible composition is maximised. The method for determining the Vickers hardness of the frozen confection is described in Example 4.

## SHELL MANUFACTURE

The shell can be manufactured by applying the first solid fat-based edible composition to the interior surface of the deformable container held at ambient temperature using a spray nozzle operating at 40 to 45 degrees centigrade. Alternatively, a spinning disc applicator operating at 30 to 40 degrees centigrade and about 1000 rpm can be used. The spinning disc has the advantage of being suitable for applying compositions with higher viscosities or at lower temperature.

## ICE CREAM MANUFACTURE

The frozen confection, typically ice cream, manufactured using conventional means known to the person skilled in the art, is then co-extruded with the second solid fat-based edible composition into the shell through a nozzle which has multiple apertures from which frozen confection and second solid fat-based edible composition are extruded from alternating apertures. The apertures for the second solid fat-based edible composition form 40 x 2 mm slots arranged in parallel. The term "slot" is not meant to limit the apertures to solely a rectangular shape but includes broadly longitudinally shaped apertures. The dosing of the frozen confection sets the shell.

The upper surface of the filling is optionally tamped and then coated with a third solid fat-based edible composition using a spray nozzle.

Finally, the resulting product is frozen.

## CASSON VISCOSITY, CASSON YIELD VALUE

Preferably the Casson viscosity of the liquid first, second and/or third solid fat-based edible compositions is 0.1-1, more preferably 0.25-0.75 Pa.s. Preferably the Casson yield value of the liquid first, second and/or third solid fat-based edible compositions is 0-2, more preferably 0.3-1.8 Pa. It has been observed that these preferred and most preferred viscosity ranges provide viscosity which best balance the need to be able to apply the first solid fat-based edible composition to the interior surface of the deformable container, whilst at the same time, do not suffer from too much drainage thereby leading to thinning of the shell at the top of the deformable container.

The Casson viscosity and Casson yield value were measured using an AR2000 rheometer (TA Instruments) using the procedure as laid down in ICA 46: 2000. The temperature was controlled at 40 degrees centigrade. A cup and bob geometry, wherein the ratio of the radius of the bob: cup should be > 95 %, is used, e.g. DIN system MV1. The gap must be completely filled.

The sample under test is pre-sheared at 2 s-1 until stable (viscosity changes < 2 %). The shear was stepped up at least 10 times and preferably more than 20 times from 2-50 s-1 over 3 minutes, held for 1 minute at 50 s-1, and then stepped down over 3 minutes.

The Casson equation was applied in the range 5-50 s-1 on a down curve of a square root stress vs square root rate plot, giving the Casson yield value (Pa) and the Casson viscosity (Pa.s).

Preferably the Casson viscosity and Casson yield value of the second solid fat-based edible composition are the same or similar to those for the first solid fat-based edible composition. If the Casson viscosity and Casson yield value are too low, then the second solid fat-based edible composition will drain from between the alternating layers of frozen confection. If the Casson viscosity and Casson yield value are too high, the second solid fat-based edible composition cannot be pumped through the nozzle.

Preferably the Casson viscosity and Casson yield value of the third solid fat-based edible composition are the same or similar to those for the first solid fat-based edible composition. At the preferred Casson viscosity and Casson yield value, the third solid fat-based edible composition can be easily sprayed onto the surface of the filling and will spread evenly across the surface eliminating any unevenness thereby to provide a flat final surface.

Except in the operative and comparative examples, all numbers in the description indicating amounts of materials, conditions of reaction, physical properties of materials, and/or use are to be understood as being preceded by the word "about".

Where values are disclosed as a range of upper and/or lower and/or preferred limits, all limits may be combined thereby to describe preferred ranges.

The present invention will now be further described with reference to the following non-limiting examples.

## EXAMPLES

### Example 1: Preparation of solid fat-based edible composition

Milk Chocolate

|  | % w/w |
|---|---|
| Sucrose | 40 |
| Cocoa butter | 25 |
| Cocoa mass | 20 |

(continued)

|  | % w/w |
|---|---|
| Whole milk powder | 10 |
| Butter oil | 4.5 |
| Emulsifiers | 0.5 |
| Flavour | 0.01 |

The manufacture of chocolate is well known to the skilled person in the art, however broadly the steps are:

(a) Mixing the ingredients.
(b) Grinding the mixture.
(c) The ground mixture is then subject to conching where the ground mixture is rolled and kneaded at high temperature to develop the flavour.
(d) The conched mixture is then tempered by cooling thereby controlling the formation of butter fat crystals to improve the appearance of the chocolate.
(e) The resulting tempered chocolate is then moulded.

**Example 2: Preparation of vanilla ice cream**

|  | % w/w |
|---|---|
| Water | 43.45 |
| Skimmed milk powder | 7 |
| 40 % fat cream | 25 |
| Sucrose | 12 |
| Glucose | 12 |
| Stabilisers | 0.2 |
| Emulsifiers | 0.25 |
| Flavour | 0.1 |

The manufacture of ice cream is well known to the skilled person in the art and is described in detail in Chapter 4 of "The Science of Ice Cream" (C Clarke, RSC, 2004), but broadly the steps are:

(a) All the ingredients are added to water and blended together.
(b) The resulting mixture then undergoes homogenisation and pasteurisation.
(c) The pasteurised mixture is then cooled to less than 5 degrees centigrade and kept at that temperature for between 4-72 hours to provide optimum microstructure.
(d) The resulting aged mixture is then passed through a freezer machine, where freezing and aeration occurs together.
(e) The resulting ice cream is then hardened.

**Example 3: Determination of the Young's modulus, of the shell of first solid fat-based edible composition**

Three solid fat-based edible compositions as described below were prepared by a method known to the skilled person in the art.

Table 1: Chocolate formulations

| Ingredient (weight) | High cocoa milk chocolate | Milk chocolate | White chocolate |
|---|---|---|---|
| Sucrose | 40 | 40 | 40 |
| Cocoa butter | 25 | 30 | 38 |
| Cocoa mass | 20 | 6 | |
| Whole milk powder | 10 | 24 | 22 |

(continued)

| Ingredient (weight) | High cocoa milk chocolate | Milk chocolate | White chocolate |
|---|---|---|---|
| Butter oil | 5 | | |
| Emulsifier | <1 | <1 | <1 |
| Flavouring | <0.1 | <0.1 | <0.1 |

The Young's modulus, yield strength and work of fracture of each chocolate was determined as follows:

1. 50 x 10 x 2.2 mm strips of chocolate were produced using moulds, blast freezing at - 32 degrees centigrade, and leaving the chocolate to rest for a minimum of 2 weeks at -18 degrees centigrade before use.

2. Chocolate strips (10 replicates per temperature) were placed in an environmental chamber set to -18 degrees centigrade one day before mechanical measurement.

3. The measurement apparatus was enclosed in a temperature controlled cabinet set to the relevant testing temperature (-18 degrees centigrade). Chocolate strips were transferred from the environmental chamber to the temperature controlled cabinet immediately prior to measurement.

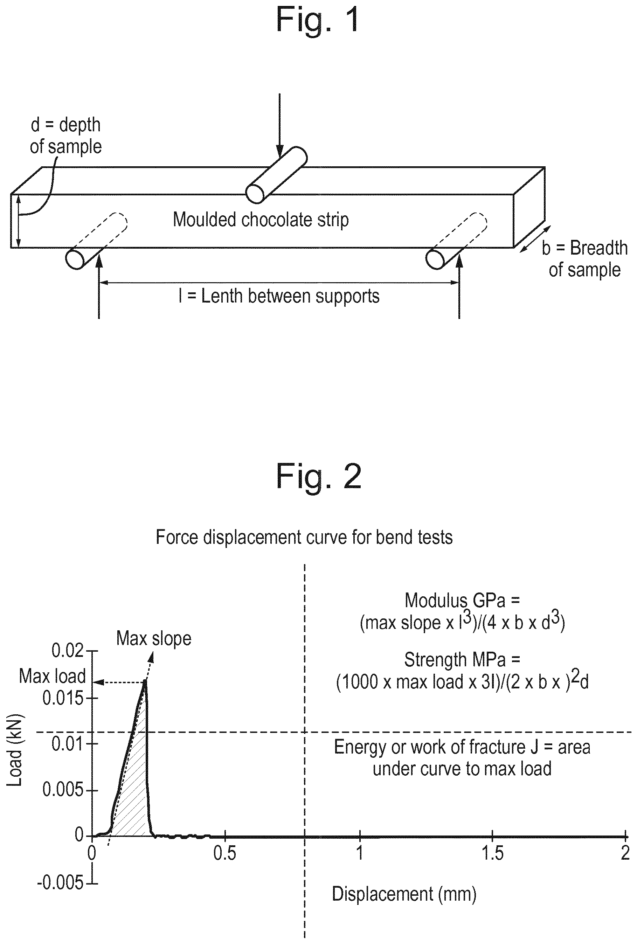

4. Measurements were conducted using a modified 3 - point bend test geometry adapted to evaluate thin layers of chocolate on an Instron (type 5500R) testing machine. The three points were replaced with circular cross section bars of 5 mm diameter, arranged perpendicular to the samples to spread the load as shown in Figure 1. For each test the chocolate strip was placed centrally on the bars and the crosshead was set in a position just above (approximately 0.4 mm) the strip surface.

5. The test parameters were:

    a. Load cell 100 Newton
    b. Crosshead speed 10 mm / min
    c. Test length 10 mm
    d. Span 30 mm

Software (Bluehill2TM version 2.17) recorded the failure stress of each chocolate strip from which the Young's modulus (GPa), yield strength (MPa) and work of fracture (J) were calculated in accordance with the equations provide in Figure 2. In the equations, the distance between two bars supporting the chocolate strip is given by "I" (mm), the height of the chocolate strip is given by "d" (mm) and the width of the chocolate strip is given by "b" (mm). The results are summarised in Table 2.

**Table 2: Young's modulus (GPa), yield strength (MPa) and work of fracture (J) of chocolate strips consisting of the chocolate formulations described in Table 1 with standard deviations.**

| Fat based edible compositions | Young's Modulus (GPa) | Yield strength (MPa) | Work of fracture (J) |
|---|---|---|---|
| High cocoa milk chocolate | 1.376 +/- 0.218 | 7.050 +/- 1.14 | 0.00079 |
| Milk chocolate | 1.233 +/- 0.155 | 6.100 +/- 0.48 | - |
| White chocolate | 1.593 +/- 0.252 | 5.840 +/- 0.94 | 0.00074 |

**Example 4: Method for determining the Vickers hardness of the frozen confection**

The Vickers Hardness of a material is a measure of the material's resistance to plastic deformation. The test is an indentation test that involves pushing a pyramid shaped indentor into the surface of a material and recording the force applied as a function of tip displacement. Force and displacement are measured during the indentation loading cycle and the unloading cycle. The test is described in "Handbook of plastics test materials" Ed. R. P. Brown, Pub. George Godwin Limited, The Builder Group, 1-3 Pemberton Row, Fleet Street, London, 1981.

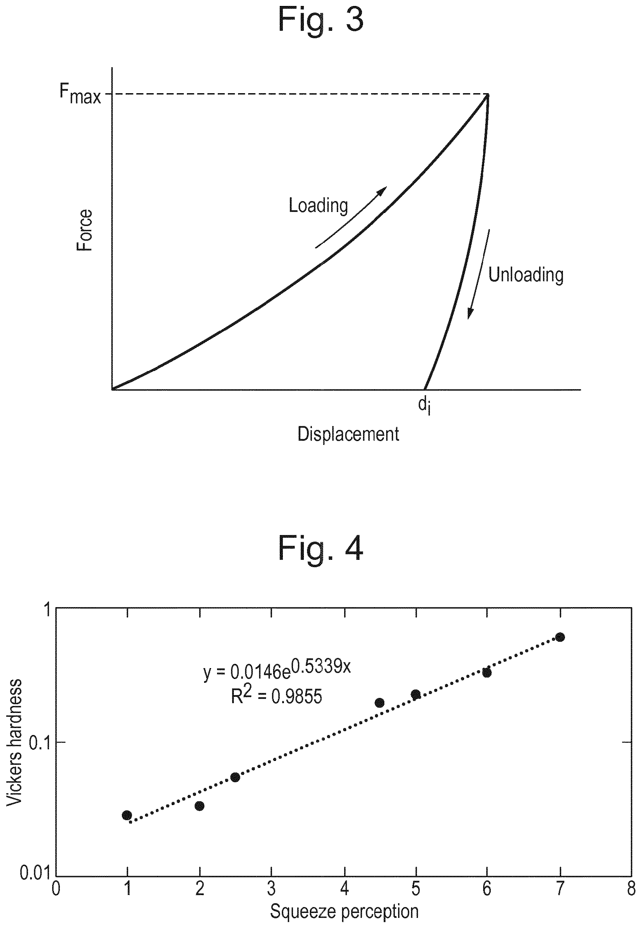

The Vickers pyramid geometry is an engineering industry standard (BSi 427,1990). It has an apex angle at the tip of 136 degrees. Hardness is determined as $H_v = F_{max}/A$, where $H_v$ is the Vickers Hardness, $F_{max}$ is the maximum applied force (see Figure 3) and A is the projected area of the indentation left in the material's surface. The area A is determined by assuming the indentation has the same geometry as the indentor that formed it, i.e., a Vickers pyramid, and therefore the projected area can be determined from the indent depth given by $d_i$ in Figure 3, wherein $A = 24.5d_i^2$.

The test samples were 500 ml blocks, manufactured by extruding the ice confection (typically at a temperature of from -1 to 5 degrees centigrade) from a scraped surface heat exchanger into standard 500 ml packets and then placing the packets into a blast freezer at-35 degrees centigrade for two hours prior to storage at -25 degrees centigrade. Prior to testing, the samples were equilibrated overnight at the required test temperature of -18 degrees centigrade.

Measurements were conducted on a universal testing machine made by Instron (code 4500), within a temperature controlled cabinet at -18 degrees centigrade. The crosshead speed was 2.0 mm/minute. The maximum load was 95 N. The pyramid tip pushed into the surface of the frozen confection to a depth of 2.5 mm.

The frozen confection was also tested for perceived hardness using a manual squeeze test in which frozen confection was filled into deformable plastics tubs and squeezed by hand. The hardness of the frozen confection was assessed according to the following scale:

1 = much too soft
2 = too soft
3 = OK soft
4 = ideal
5 = OK hard
6 = too hard
7 = much too hard

The results of the Vickers hardness and squeeze test for a variety of different frozen confections of varying hardness are shown in Figure 4 from which it is apparent that there is a linear relationship between the logarithm of the Vickers hardness and the corresponding results for the squeeze test.

**General Method of Preparing a Frozen Dessert**

The frozen dessert is prepared according to the process described under 'SHELL MANUFACTURE' and 'ICE CREAM MANUFACTURE', above.

**Measurement of occurrence of lid fracture, loudness and quantity of audible cracking sound of the frozen dessert during applied force.**

A force, either manual or mechanical, was applied to a frozen dessert and the occurrence of lid fracture, loudness of cracking and quantity of cracking sounds were measured.

For all examples a frozen dessert was prepared according to the General Method of preparing a Frozen Dessert and comprised a deformable container of a plastic material, ice cream, and a first, second and third solid fat-based edible composition. The quantity of first and second solid fat-based edible material was varied from 0 g to 35 g and from 0 g to 34 g respectively. The quantity of the third solid fat-based edible material was 26g. The frozen dessert was stored at -18 °C and allowed to stand at room temperature for approximately 10 mins prior to testing in Example 5 and 6.

**General Manual Method:**

Frozen desserts were prepared according to the general method. The frozen dessert was squeezed with two hands by a panellist on opposite sides of the deformable container, the deformable container was rotated about its horizontal circular base (vertical axis) by ninety degrees and squeezed for a second time with two hands by the same panellist with the same or similar force at a point a quarter of a full rotation of the container about its vertical axis from the first squeeze points.

**Example 5: Manual Force Applied to Frozen Dessert.**

The General Manual Method was followed. Three panellists (1, 2, and 3) squeezed three identical samples according the General Manual Method for each variation in quantity of first and second solid fat-based composition. The number of samples where the lid fractured, the loudness of the cracking sound(s) and the quantity of cracking sound(s) were measured both by the panellist and an acoustic detector.

**Lid Fracture:**

An estimate of the force applied to the frozen dessert during squeezing by each panellist is provided in Table 3a.

**Table 3a: Force Applied by Panellists:**

| Panellist | Squeeze force (kg) |
|---|---|
| 1 | 5-7 |
| 2 | 3.5-4 |
| 3 | 6-7 |

**Table 3b: Occurrence of Lid Fracture.**

| | | Amount of second solid fat-based composition (g) - RIBBONS | | | | | | | | | | | | | | |
|---|---|---|---|---|---|---|---|---|---|---|---|---|---|---|---|---|
| | | 0 | | | 20 | | | 25 | | | 30 | | | 35 | | |
| | | Panellist Number | | | | | | | | | | | | | | |
| | | 1 | 2 | 3 | 1 | 2 | 3 | 1 | 2 | 3 | 1 | 2 | 3 | 1 | 2 | 3 |
| * | 0 | 3 | 2 | 1 | 1 | 0 | 1 | 0 | 0 | 0 | 0 | 0 | 0 | 1 | 0 | 0 |
| | 20 | 1 | 0 | 0 | 0 | 0 | 0 | | | | | | | 0 | 0 | 0 |
| | 25 | 1 | 0 | 0 | | | | 0 | 0 | 0 | | | | | | |
| | 30 | 2 | 2 | 1 | | | | | | | | | | | | |
| | 34 | 1 | 0 | 1 | 0 | 0 | 0 | | | | | | | 0 | 0 | 0 |
| *= Amount of first solid fat-based composition (g) - SHELL | | | | | | | | | | | | | | | | |

The measurement provided in Table 3b is the number of samples where the third solid fat-based composition (the lid) fractured during the experiment. For example: 3 means that the lid fractured for all three samples squeezed by the panellist. Similarly, the number 2 means that the lid fractured for two out of three samples squeezed by the panellist.

Table 3b illustrates that the lid is vulnerable to fracture if either the first or second fat-based composition is not present.

**Loudness of Cracking Sound(s):**

The loudness of the sounds and number of cracking sounds of the samples of Example 5 were measured by both the person squeezing the frozen dessert and an acoustic detector.

The panellists measured the loudness and quantity of crack(s) for each squeeze using a scale of 0-4 (Table 4a). The measurements for each identical sample were combined to obtain an average score. The average score was calculated by dividing the sum of the measurements for each identical sample by the number of samples. A frozen dessert consisting of a deformable container and frozen confection only; i.e.: no solid fat-based composition present, was used as a control and scored a value of 0.0.

**Table 4a: Scale used by Panellists to Determine Loudness of Cracking Sound:**

| Scale | Loudness of Cracks | Quantity of Cracks |
|---|---|---|
| 0 | None | none |
| 1 | Very Quiet | very brief, a single crack |
| 2 | Quiet | a few cracks |
| 3 | Loud | several cracks in a short period |
| 4 | Very Loud | cracking continued throughout squeezing |

**Table 4b: Average Loudness of Cracks measured by panellists:**

| | | Amount of second solid fat-based composition (g) - RIBBONS | | | | |
|---|---|---|---|---|---|---|
| | | 0 | 20 | 25 | 30 | 35 |
| Amount of first solid fat-based composition (g) - SHELL | 0 | 1.5 | 0.6 | 1.0 | 0.9 | 1.3 |
| | 20 | 2.1 | 1.9 | | | 1.8 |
| | 25 | 2.2 | | 1.8 | | |
| | 30 | 2.0 | | | | |
| | 34 | 2.3 | 1.8 | | | 1.8 |

Table 4b illustrates that the presence of one or more of a first and second solid fat-based composition provides an audible crack. The presence of a third fat-based composition; i.e.: 0 g of both first and second fat-based composition, provides an audible crack comparable in loudness to a frozen dessert comprising the largest amount (35 g) of second fat-based compositions and no first fat-based composition. However, this crack is solely due to the fracture of the lid which is not desired.

The results in Table 4c correspond to the loudness of the crack for the average of the first and second squeeze of the General Manual Method. Results are measured in dB.

**Table 4c: Loudness of cracks measured by an acoustic detector.**

| | | Amount of second solid fat-based composition (g) - RIBBONS | | | | |
|---|---|---|---|---|---|---|
| | | 0 | 20 | 25 | 30 | 35 |
| Amount of first solid fat-based composition (g) - SHELL | 0 | 60.4 | 46.2 | 54.4 | 49.7 | 54.8 |
| | 20 | 70.0 | 71.6 | | | 69.4 |
| | 25 | 74.4 | | 66.2 | | |
| | 30 | 73.8 | | | | |
| | 34 | 74.7 | 65.3 | | | 63.1 |

Table 4c illustrates that an audible crack is present when one or more of the first, second or third solid fat-based composition is present. The largest quantity of first solid fat-based composition (34 g) provides the loudest cracking sounds (74.7 dB). The presence of the third fat-based composition only; i.e. 0 g of both first and second fat-based composition, provides a quantity of cracks greater than the second fat-based composition only. However, this crack is solely due to the fracture of the lid which is not desired.

**Quantification of Cracking Sounds:**

**Table 5a: Average Quantity of Cracking Sounds measured by panellists.**

| | | Amount of second solid fat-based composition (g) - RIBBONS | | | | |
|---|---|---|---|---|---|---|
| | | 0 | 20 | 25 | 30 | 35 |
| Amount of first solid fat-based composition (g) - SHELL | 0 | 0.7 | 0.4 | 0.4 | 0.6 | 0.8 |
| | 20 | 1.7 | 1.4 | | | 1.6 |
| | 25 | 2.1 | | 1.7 | | |
| | 30 | 1.8 | | | | |
| | 34 | 1.5 | 1.9 | | | 1.8 |

Table 5a illustrates that the presence of a first and second solid fat-based composition (g) provides an audible crack. The presence of a third fat-based composition i.e. 0 g of both first and second fat-based composition, provides a quantity of cracks comparable to the second fat-based composition only. However, this crack is solely due to the fracture of the lid which is not desired. The presence of the larger amount of first fat-based composition combined with the second solid fat-based composition increases the quantity of cracking sounds.

**Table 5b: Quantity of Cracking Sounds (number of sound peaks) measured by an acoustic detector.**

| | | Amount of second solid fat-based composition (g) - RIBBONS | | | | |
|---|---|---|---|---|---|---|
| | | 0 | 20 | 25 | 30 | 35 |
| Amount of first solid fat-based composition (g) - SHELL | 0 | 9.5 | 5.6 | 3.2 | 3.8 | 6.3 |
| | 20 | 14.0 | 11.2 | | | 11.3 |
| | 25 | 15.5 | | 11.9 | | |
| | 30 | 15.6 | | | | |
| | 34 | 14.6 | 11.4 | | | 11.1 |

Table 5b illustrates that an audible crack is present when one or more of the first, second or third solid fat-based composition is present.

Comparison of Tables 4b and 4c, and of Tables 5a and 5b show a good correlation between the panellist testing and acoustic testing with the acoustic detector. These comparisons demonstrate that testing by panellists corresponds well to testing with an acoustic detector.

**General Mechanical Method:**

Frozen desserts were prepared according to the general method. The frozen dessert was held in a sample holder and a force was applied by a bar probe. The bar probe had a constant speed of 1 mm/s and a peak force of 5, 7 and 10 kg. In all tests a control frozen dessert consisting of a deformable container and frozen confection only; i.e. no solid fat-based composition was present, scored a value of 0.0.

**Example 6: Mechanical Force Applied to Frozen Dessert.**

The general mechanical method was followed. Three identical samples were tested (squeezed) for each variation in quantity of first and second solid fat based composition.

**Table 6: Occurrence of Lid Fracture.**

| Table 6 identifies the lids that were fractured and the force applied to the frozen dessert if fracturing occurred. | | | | | | | | | | | | | | | |
|---|---|---|---|---|---|---|---|---|---|---|---|---|---|---|---|
| | | Amount of second solid fat-based composition (g) - RIBBONS | | | | | | | | | | | | | |
| | | 0 | | | 20 | | | 25 | | | 30 | | | 35 | |
| | | Temperature °C | | | | | | | | | | | | | |
| | | -18 | -16 | -16 | -18 | -16 | -16 | -18 | -16 | -16 | -18 | -16 | -16 | -18 | -16 | -16 |
| * | 0 | 5.0 | 8.2 | 4.8 | 7.7 | 9.0 | NF | NF | 9.0 | NF | 9.8 | NF | NF | 10.0 | NF | 5.8 |
| | 20 | NF | 7.3 | NF | NF | NF | NF | | | NF | NF | NF | | | | |
| | 25 | NF | 7.6 | NF | | NF | NF | NF | | | | | | | | |
| | 30 | NF | 9.5 | 6.8 | | | | | | | | | | | | |
| | 34 | 9.7 | NF | NF | NF | 9.8 | NF | | | NF | NF | NF | | | | |
| *= Amount of first solid fat-based composition (g) - SHELL | | | | | | | | | | | | | | | |

The values provided in Table 6 are the force applied (kg) by the bar probe. Where there is the value 'NF', the third fat-based composition (the lid) did not fracture, where there is a value, this represents fracture of the third fat-based composition (the lid) and the force applied to the frozen dessert. Where there is no value, the sample was not tested.

Similarly to the manual tests illustrated in Table 3b, Table 6 illustrates that the lid is vulnerable to fracture if either the first or second fat-based composition is not present.

**Table 7: Loudness of Cracking Sounds:**

The results in Table 7 correspond to the loudness of the crack for the first squeeze of the general mechanical method. Measured in dB.

|  |  | Amount of second solid fat-based composition (g) - RIBBONS | | | | |
|---|---|---|---|---|---|---|
|  |  | 0 | 20 | 25 | 30 | 35 |
| Amount of first solid fat-based composition (g) - SHELL | 0 | 74 | 0 | 60 | 60 | 60 |
|  | 20 | 59 | 48 |  |  | 70 |
|  | 25 | 64 |  | 59 |  |  |
|  | 30 | 62 |  |  |  |  |
|  | 34 | 67 | 70 |  |  | 55 |

Table 7 illustrates that the combination of the largest quantity of second solid fat-based composition (35 g) and the smallest quantity of first solid fat-based composition (20 g) result in a larger crack for the first squeeze (70 dB), compared to either the first or second solid fat-based composition present (59 - 67 dB and 60 dB, respectively).

Similarly, the combination of the largest quantity of first solid fat-based composition (34 g) and the smallest quantity of second solid fat-based composition (20 g) result in a larger crack for the first squeeze (70 dB), compared to a frozen dessert comprising the first or second solid fat-based composition (59 - 67 dB and 60 dB, respectively).

**Table 8: Quantity of Cracking Sounds (number of sound peaks).**

|  |  | Amount of second solid fat-based composition (g) - RIBBONS | | | | |
|---|---|---|---|---|---|---|
|  |  | 0 | 20 | 25 | 30 | 35 |
| Amount of first solid fat-based composition (g) - SHELL | 0 | 6.0 | 0 | 2.3 | 2.5 | 4.0 |
|  | 20 | 3.8 | 3.5 |  |  | 6.3 |
|  | 25 | 5.3 |  | 2.3 |  |  |
|  | 30 | 5.5 |  |  |  |  |
|  | 34 | 4.5 | 9.0 |  |  | 3.5 |

Table 8 illustrates that the combination of the largest quantity of second solid fat-based composition (35 g) and the smallest quantity of first solid fat-based composition (20 g) result in a larger number of sound peaks for the first squeeze (6.3), compared to either the first or second solid fat-based composition present (3.8 - 4.5 and 2.3 -4.0, respectively).

Similarly, the largest quantity of first solid fat-based composition (34 g) and the smallest quantity of second solid fat-based composition (20 g) result in a larger number of sound peaks for the first squeeze (9.0), compared to a frozen dessert comprising the first or second solid fat-based composition (3.8 - 4.5 and 2.3 - 4.0, respectively).

**Claims**

1. A frozen dessert comprising:

(a) A deformable container that returns to exactly its original state after being deformed;
(b) A shell of first solid fat-based edible composition applied to an interior surface of the deformable container;
(c) A filling for the shell, the filling consisting of a frozen confection and optionally one or more ribbons of a second solid fat-based edible composition; and
(d) A lid of third solid fat-based edible composition for the shell thereby to enclose the filling.

wherein the first and third solid fat based compositions are compositions chosen from the groups consisting of chocolate, chocolate analogue and fruit fat composition; wherein the shell has a wall thickness of 0.5 to 3.0 mm and a Young's modulus of 0.3 - 5.0 GPa at a serving temperature of -18 degrees centigrade, measured according to the method of Example 3 of the description, and the frozen confection has a Vickers hardness of 0.042-0.36 at a serving temperature of -18 degrees centigrade measured according to BSi 427, 1990.

2. A frozen dessert according to any one of claim 1, wherein the shell has a yield strength of 1-20 MPa at a serving temperature of -18 degrees centigrade, carried out according to the method described in Example 3.

3. A frozen dessert according to any one of claims 1 or 2, wherein the shell has a work of fracture of 0.0004-0.002 J at a serving temperature of -18 degrees centigrade, carried out according to the method described in Example 3.

4. A frozen dessert according to any one of claims 1 to 3, wherein the first and optionally the third fat-based edible compositions are chocolate.

5. A frozen dessert according to any one of claims 1 to 4, wherein the frozen confection has a specific heat capacity of 2500 to 3600 J/kg/K.

6. A frozen dessert according to any one of claims 1 to 5, wherein the frozen confection has an overrun of 40 to 150 %.

7. A frozen dessert according to any one of claims 1 to 6, wherein the frozen confection has an ice content at -18 degrees centigrade of 35-55 %.

**Patentansprüche**

1. Gefrorene Nachspeise, umfassend:

(a) einen verformbaren Behälter, der nach einer Verformung wieder genau in seinen ursprünglichen Zustand zurückkehrt;
(b) eine Hülle aus einer ersten essbaren Zusammensetzung auf Basis von festem Fett, die auf die Innenfläche des verformbaren Behälters aufgetragen ist;
(c) eine Füllung für die Hülle, wobei die Füllung aus einer gefrorenen Süßware und optional einem oder mehreren Streifen einer zweiten essbaren Zusammensetzung auf Basis von festem Fett besteht; und
(d) einen Deckel aus einer dritten essbaren Zusammensetzung auf Basis von festem Fett für die Hülle, um die Füllung zu umschließen.

wobei die erste und dritte Zusammensetzung auf Basis fester Fette aus der Gruppe ausgewählt sind, die aus Schokolade, Schokoladenanaloga und Fruchtfettzusammensetzungen besteht; wobei die Hülle eine Wandstärke von 0,5 bis 3,0 mm und einen Elastizitätsmodul von 0,3-5,0 GPa bei einer Serviertemperatur von -18 Grad Celsius aufweist, gemessen nach dem Verfahren aus Beispiel 3 der Beschreibung, und die gefrorene Süßware eine Vickers-Härte von 0,042-0,36 bei einer Serviertemperatur von - 18 Grad Celsius aufweist, gemessen nach BSi 427, 1990.

2. Gefrorene Nachspeise nach einem der Ansprüche 1, wobei die Hülle bei einer Serviertemperatur von -18 Grad Celsius eine Streckgrenze von 1-20 MPa aufweist, durchgeführt nach dem in Beispiel 3 beschriebenen Verfahren.

3. Gefrorene Nachspeise nach einem der Ansprüche 1 oder 2, wobei die Hülle eine Brucharbeit von 0,0004-0,002 J bei einer Serviertemperatur von -18 Grad Celsius aufweist, durchgeführt nach dem in Beispiel 3 beschriebenen Verfahren.

4. Gefrorene Nachspeise nach einem der Ansprüche 1 bis 3, wobei die erste und gegebenenfalls die dritte essbare Zusammensetzung auf Fettbasis Schokolade sind.

5. Gefrorene Nachspeise nach einem der Ansprüche 1 bis 4, wobei die gefrorene Süßspeise eine spezifische Wärmekapazität von 2.500 bis 3.600 J/kg/K aufweist.

6. Gefrorene Nachspeise nach einem der Ansprüche 1 bis 5, wobei die gefrorene Süßspeise einen Aufschlag von 40 bis 150 % aufweist.

7. Gefrorene Nachspeise nach einem der Ansprüche 1 bis 6, wobei die gefrorene Süßware bei -18 Grad Celsius einen Eisanteil von 35-55 % aufweist.

**Revendications**

1. Dessert glacé comprenant :

   (a) un récipient déformable qui reprend exactement sa forme initiale après avoir été déformé ;
   (b) un enrobage constitué d'une première composition comestible solide à base de matières grasses appliquée sur une surface intérieure du récipient déformable ;
   (c) une garniture pour l'enrobage, la garniture consistant en une confiserie glacée et, éventuellement, un ou plusieurs rubans constitués d'une deuxième composition comestible solide à base de matières grasses ; et
   (d) un couvercle constitué d'une troisième composition comestible solide à base de matières grasses pour l'enrobage, enfermant ainsi la garniture.

   dans lequel les première et troisième compositions solides à base de matières grasses sont des compositions choisies dans les groupes constitués de chocolat, d'analogue de chocolat et de composition grasse à base de fruits ;
   dans lequel l'enrobage présente une épaisseur de paroi de 0,5 à 3,0 mm et un module de Young de 0,3 à 5,0 GPa à une température de service de -18 degrés Celsius, mesuré selon le procédé de l'exemple 3 de la description, et la confiserie glacée présente une dureté de Vickers de 0,042 à 0,36 à une température de service de -18 degrés Celsius mesurée selon la norme BSi 427, 1990.

2. Dessert glacé selon l'une quelconque des revendications 1, dans lequel l'enrobage présente une limite d'élasticité de 1 à 20 MPa à une température de service de -18 degrés Celsius, mesurée selon le procédé décrit dans l'exemple 3.

3. Dessert glacé selon l'une quelconque des revendications 1 ou 2, dans lequel l'enrobage présente un travail de fracture de 0,0004 à 0,002 J à une température de service de -18 degrés Celsius, mesurée selon le procédé décrit dans l'exemple 3.

4. Dessert glacé selon l'une quelconque des revendications 1 à 3, dans lequel la première et éventuellement la troisième composition comestible à base de matières grasses sont du chocolat.

5. Dessert glacé selon l'une quelconque des revendications 1 à 4, dans lequel la confiserie glacée présente une capacité thermique spécifique de 2 500 à 3 600 J/kg/K.

6. Dessert glacé selon l'une quelconque des revendications 1 à 5, dans lequel la confiserie glacée présente un foisonnement de 40 à 150 %.

7. Dessert glacé selon l'une quelconque des revendications 1 à 6, dans lequel la confiserie glacée présente une teneur en glace à -18 degrés Celsius de 35 à 55 %.

# Fig. 1

d = depth of sample

Moulded chocolate strip

b = Breadth of sample

l = Lenth between supports

# Fig. 2

Force displacement curve for bend tests

Modulus GPa = (max slope x $l^3$)/(4 x b x $d^3$)

Strength MPa = (1000 x max load x 3l)/(2 x b x $)^2$d

Energy or work of fracture J = area under curve to max load

Max slope

Max load

Load (kN)

Displacement (mm)

# Fig. 3

# Fig. 4

# EP 3 620 062 B1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0215706 A
- WO 2014023610 A
- WO 2008119731 A
- JP 1124354 A
- JP 8140583 A
- JP 2011182765 A
- US 2015157042 A1
- US 5135767 A
- US 5282070 A
- JP 2012016317 A
- US 2015164106 A1
- US 5356648 A

**Non-patent literature cited in the description**

- **C. CLARKE**. The Science of Ice Cream. RSC, 2004, 28-29
- **C CLARKE**. The Science of Ice Cream. RSC, 2004
- Handbook of plastics test materials. Pub. George Godwin Limited, 1981